(19) Europäisches Patentamt / European Patent Office / Office européen des brevets

(11) **EP 3 766 321 B1**

(12) **EUROPEAN PATENT SPECIFICATION**

(45) Date of publication and mention
of the grant of the patent:
**03.05.2023 Bulletin 2023/18**

(51) International Patent Classification (IPC):
*A01B 69/00* (2006.01)     *A01B 69/04* (2006.01)
*G01C 21/00* (2006.01)     *G01C 21/20* (2006.01)
*G01S 7/48* (2006.01)      *G01S 17/89* (2020.01)

(21) Application number: **19768156.2**

(22) Date of filing: **11.03.2019**

(52) Cooperative Patent Classification (CPC):
**G01C 21/005; A01B 69/001; A01B 69/008;**
**G01C 21/20;** G01S 7/4802; G01S 17/89

(86) International application number:
**PCT/JP2019/009638**

(87) International publication number:
**WO 2019/176842 (19.09.2019 Gazette 2019/38)**

(54) **WORK VEHICLE AND DEVIATION AMOUNT CALCULATION PROGRAM**

ARBEITSFAHRZEUG UND BERECHNUNGSVERFAHREN FÜR ABWEICHUNGSHÖHE

MACHINE AGRICOLE ET PROGRAMME DE CALCUL DE DEGRÉ D'ÉCART

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **15.03.2018 JP 2018048450**

(43) Date of publication of application:
**20.01.2021 Bulletin 2021/03**

(73) Proprietor: **Yanmar Power Technology Co., Ltd.**
**Osaka-shi**
**Osaka 530-8311 (JP)**

(72) Inventors:
• **SUZUKI, Akihiro**
**Osaka-shi, Osaka 530-8311 (JP)**
• **NAKAHATA, Akihiro**
**Osaka-shi, Osaka 530-8311 (JP)**
• **YOKOUE, Toshiyuki**
**Osaka-shi, Osaka 530-8311 (JP)**

(74) Representative: **Poindron, Cyrille et al**
**Novagraaf International SA**
**Chemin de l'Echo 3**
**1213 Onex (CH)**

(56) References cited:
JP-A- H01 206 904     JP-A- H01 206 904
JP-A- 2010 108 135    US-A1- 2010 104 194

• BARAWID ET AL: "Development of an Autonomous Navigation System using a Two-dimensional Laser Scanner in an Orchard Application", BIOSYSTEMS ENGINEERING, ELSEVIER, AMSTERDAM, NL, vol. 96, no. 2, 18 January 2007 (2007-01-18), pages 139-149, XP005735726, ISSN: 1537-5110, DOI: 10.1016/J.BIOSYSTEMSENG.2006.10.012
• ROSELL POLO J R ET AL: "A tractor-mounted scanning LIDAR for the non-destructive measurement of vegetative volume and surface area of tree-row plantations: A comparison with conventional destructive measurements", BIOSYSTEMS ENGINEERING, ELSEVIER, AMSTERDAM, NL, vol. 102, no. 2, 1 February 2009 (2009-02-01), pages 128-134, XP025924497, ISSN: 1537-5110, DOI: 10.1016/J.BIOSYSTEMSENG.2008.10.009 [retrieved on 2008-12-04]
• XUE JINLIN: "Guidance of an agricultural robot with variable angle-of-view camera arrangement in cornfield", AFRICAN JOURNAL OF AGRICULTURAL RESEARCH, vol. 9, no. 18, 5 May 2014 (2014-05-05), pages 1378-1385, XP055539774, DOI: 10.5897/AJAR2013.7670

EP 3 766 321 B1

• NORASHIKIN M THAMRIN ET AL: "Tree detection profile using a single non-intrusive ultrasonic sensor for inter-row tracking application in agriculture field", SIGNAL PROCESSING AND ITS APPLICATIONS (CSPA), 2013 IEEE 9TH INTERNATIONAL COLLOQUIUM ON, IEEE, 8 March 2013 (2013-03-08), pages 310-313, XP032424448, DOI: 10.1109/CSPA.2013.6530063 ISBN: 978-1-4673-5608-4

## Description

TECHNICAL FIELD

This invention relates to a work vehicle and a deviation amount calculation program.

BACKGROUND ART

Patent Literature 1 discloses a work machine that travels along a furrow. In Patent Literature 1, an automatic travel control of the work machine is performed on the basis of the angle of the work machine to a ridge and a position deviation amount of the work machine from the center of the ridge.

Patent Literature 2 discloses a harvester that performs an automatic travel control when the traveling direction of the machine approaches one side of the right and left crop rows.

CITATION LIST

Patent Literature

Patent Literature 1: Japanese Unexamined Patent Application Publication No. 2016-208871
Patent Literature 2: Japanese Unexamined Patent Application Publication No. Hei 11-275912

DISCLOSURE OF INVENTION

PROBLEMS TO BE SOLVED BY THE INVENTION

Disclosed in Patent Literature 1 is a technique directed to a field where there are ridges the edges of which can be detected relatively easily. For example, in the case of an orchard without ridges, a trunk is hidden by the leaves and branches of a crop, and thus it may not be possible to accurately detect a crop row. Therefore, it is difficult to apply the travel control such as that in Patent Literature 1 to a field without ridges.

In addition, in Patent Literature 2, an image acquired by an imaging means is rotated, an amount of deviation of a work machine from the center position of a ridge is calculated on the basis of this rotated image, and an angle in the traveling direction of the work machine with respect to the ridge is calculated. This is a process on condition that ridges extend straight along the traveling direction of the work machine. Therefore, in Patent Literature 2, when the ridges do not extend straight, it is difficult to identify the position and angle (direction) of the work machine.

Even in Patent Literature 2, the position and direction of the harvester when each crop row does not extend straight are not considered.

Documents JP H01 206904 A and US 2010/104194 A1 disclose a work vehicle configured to travel in a field where a plurality of crop rows are planted. The work vehicle comprises a distance sensor configured to acquire information on a distance from the work vehicle to each of a plurality of objects present in the field.

It is an object of the present invention to provide a work vehicle capable of identifying its own position between crop rows regardless of the condition of a field and a deviation amount calculation program capable of the same.

MEANS FOR SOLVING THE PROBLEMS

A work vehicle according to the present invention is a work vehicle that is configured to travel in a field where a plurality of crop rows are planted, and that includes a distance sensor configured to acquire information on a distance from the work vehicle to each of a plurality of objects present in the field, a rectangle identification unit configured to estimate the plurality of crop rows on a basis of the distance information and identify a rectangle whose opposite sides are adjacent crop rows of the estimated crop rows, a target setting unit configured to set a target travel route of the work vehicle between the adjacent crop rows on a basis of the rectangle, and a position deviation calculation unit configured to estimate a current position of the work vehicle between the adjacent crop rows on a basis of the rectangle, and calculate a deviation amount of the current position from the target travel route.

With this configuration, it is possible to achieve a work vehicle that can automatically set a target travel route of a work vehicle between adjacent crop rows and can acquire a deviation amount of the current position of the work vehicle from the target travel route.

In addition, with this configuration, a rectangle whose opposite sides are adjacent crop rows is identified, and the target travel route is set on the basis of the identified rectangle, and at the same time the current position of the work vehicle is estimated. Therefore, for example, when the slopes of adjacent crop rows change in the middle, such as when the adjacent crop rows bend in the middle, a rectangle according to a slope near the work vehicle in the adjacent crop rows is identified. This makes it possible to set a target travel route between adjacent crop rows corresponding to changes in the slopes of these crop rows, and to estimate the position of the work vehicle between the adjacent crop rows. In other words, with this configuration, it is possible to identify the position of the work vehicle itself between the crop rows regardless of the condition of a field such as bending of the crop rows.

One embodiment of the present invention further includes a position correction unit configured to correct a position of the work vehicle between the crop rows in such a manner that the position approaches the target travel route, on a basis of the deviation amount calculated by the position deviation calculation unit.

With this configuration, the position of the work vehicle can be corrected so as to approach the target travel route, and thus the work vehicle can be caused to automatically travel along the target travel route.

One embodiment of the present invention further includes a direction sensor configured to detect a direction of the work vehicle. The target setting unit is configured to also set a target direction of the work vehicle. The work vehicle further includes a direction deviation calculation unit configured to calculate a deviation amount of a current direction of the work vehicle detected by the direction sensor from the target direction.

With this configuration, it is possible to acquire a deviation amount of the current direction of the work vehicle from the target direction.

One embodiment of the present invention further includes a direction correction unit configured to correct a direction of the work vehicle between the crop rows in such a manner that the direction approaches the target direction, on a basis of the deviation amount calculated by the direction deviation calculation unit.

With this configuration, it is possible to cause the work vehicle to automatically travel in such a manner that the direction of the work vehicle approaches the target direction.

In one embodiment of the present invention, the rectangle identification unit repeatedly identifies the rectangle while the work vehicle travels between the crop rows, the target direction setting unit sets the target direction on a basis of the rectangle each time the rectangle is identified, and the direction deviation calculation unit calculates a deviation amount of a current direction of the work vehicle detected by the direction sensor from the target direction, each time the target direction is set.

With this configuration, for example, when the slopes of adjacent crop rows change in the middle, such as when the adjacent crop rows bend in the middle, a rectangle according to a slope near the work vehicle in the adjacent crop rows is identified. This makes it possible to set a target direction corresponding to changes in the slopes of the adjacent crop rows, and to acquire a deviation amount of the current direction of the work vehicle from the target direction.

A deviation amount calculation program according to the present invention is a deviation amount calculation program that sets a target travel route of a work vehicle in a field where a plurality of crop rows are planted and calculates a deviation amount of the work vehicle from the target travel route. The deviation amount calculation program causes a computer to function as a rectangle identification unit for estimating the plurality of crop rows on a basis of information on a distance from the work vehicle to each of a plurality of objects present in the field and identifying a rectangle whose opposite sides are adjacent crop rows of the estimated crop rows, a target setting unit for setting a target travel route of the work vehicle, between the adjacent crop rows, on a basis of the rectangle, and a position deviation calculation unit for estimating a current position between the adjacent crop rows on a basis of the rectangle and calculate a deviation amount of the current position from the target travel route.

With this deviation amount calculation program, it is possible to automatically set a target travel route of a work vehicle between adjacent crop rows and to acquire a deviation amount of the current position of the work vehicle from the target travel route.

In addition, with this deviation amount calculation program, a rectangle whose opposite sides are adjacent crop rows is identified, and the target travel route is set on the basis of the identified rectangle, and at the same time the current position of the work vehicle is estimated. Therefore, for example, when the slopes of adjacent crop rows change in the middle, such as when the adjacent crop rows bend in the middle, a rectangle according to a slope near the work vehicle in the adjacent crop rows is identified. This makes it possible to set a target travel route between adjacent crop rows corresponding to changes in the slopes of these crop rows, and to estimate the position of the work vehicle between the adjacent crop rows. In other words, with this configuration, it is possible to identify its own position of the work vehicle between the crop rows regardless of the condition of a field such as bending of the crop rows.

The above and/or other objects, features and effects of the present invention will be made clear by the description of the embodiment below with reference to the accompanying drawings.

BRIEF DESCRIPTION OF DRAWINGS

FIG. 1 is a side view illustrating a schematic configuration of a work vehicle according to an embodiment of the present invention.
FIG. 2 is a front view illustrating a schematic configuration of the work vehicle of FIG. 1.
FIG. 3 is a schematic diagram illustrating how the work vehicle automatically travels in a field.
FIG. 4 is a block diagram illustrating a main electrical configuration of the work vehicle.
FIG. 5 is a schematic perspective view illustrating a state where a laser light is emitted from a distance sensor to a crop included in a crop row.
FIG. 6 is a schematic plan view of FIG. 5 seen from above.
FIG. 7A is a schematic diagram for explaining a procedure of a rectangle identification process.
FIG. 7B is a schematic diagram for explaining the next procedure of FIG. 7A.
FIG. 7C is a schematic diagram for explaining the next procedure of FIG. 7B.
FIG. 7D is a schematic diagram for explaining the next procedure of FIG. 7C.
FIG. 8 is a schematic diagram for explaining the operation of a target setting unit.

FIG. 9 is a schematic diagram for explaining the operation of a deviation calculation unit.

FIG. 10 is a flowchart illustrating an overall procedure of an automatic travel control process by an automatic travel control unit.

FIG. 11 is a schematic diagram for explaining that a target direction can be corrected in accordance with a change in the slope of a crop row even when the slopes of adjacent crop rows change in the middle.

DESCRIPTION OF EMBODIMENTS

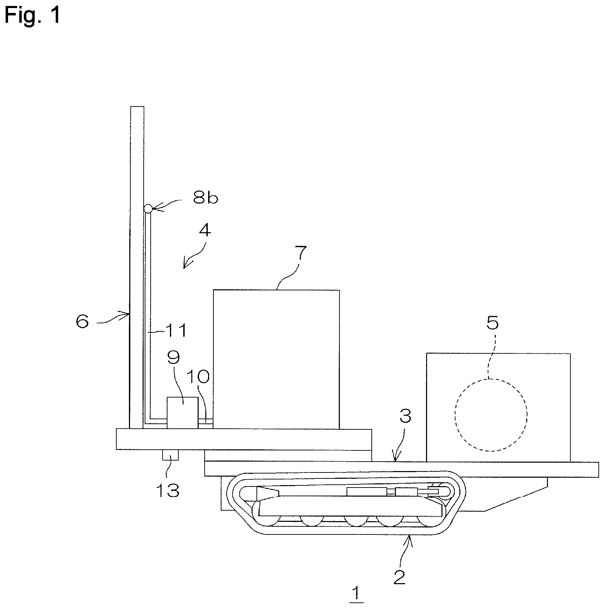

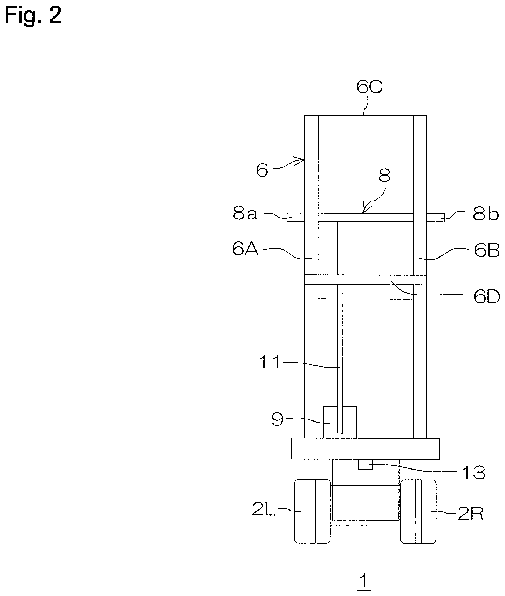

FIG. 1 is a side view illustrating a schematic configuration of a work vehicle according to an embodiment of the present invention. FIG. 2 is a front view illustrating a schematic configuration of the work vehicle of FIG. 1.

A work vehicle 1 is, in this embodiment, a work vehicle for spraying a chemical liquid. The work vehicle 1 includes a traveling device 2, a machine body frame 3 supported on the traveling device 2, and a chemical liquid spraying device 4 provided on the machine body frame 3. In this embodiment, the traveling device 2 is a crawler type, and includes right and left traveling devices 2L and 2R. The traveling device 2 may be a wheel type. Hereinafter, the schematic representation of a vehicle including a wheel type traveling device may be used as a schematic representation of the work vehicle 1.

An engine 5 as a drive source is disposed at the rear of the machine body frame 3. A support frame 6 is provided at the front of the machine body frame 3. The support frame 6 includes a pair of right and left masts 6A and 6B supported by the machine body frame 3, a first coupling member 6C that couples the upper ends of these masts 6A and 6B, and a second coupling member 6D that couples a length intermediate portions of these masts 6A and 6B.

The chemical liquid spraying device 4 includes a chemical liquid tank 7, a nozzle unit 8, and a pump unit 9. The chemical liquid tank 7 is disposed in the front-rear central portion on the machine body frame 3. The chemical liquid tank 7 stores a chemical liquid. The chemical liquid may be any liquid that is sprayed on crops or soil, and includes a pesticide, water, and the like. The nozzle unit 8 is attached to a position near the upper end of the support frame 6. The nozzle unit 8 is a hollow body that extends in the right-left direction and includes nozzles 8a and 8b for spouting the chemical liquid at both ends. The nozzle unit 8 is formed with a chemical liquid inlet (not illustrated).

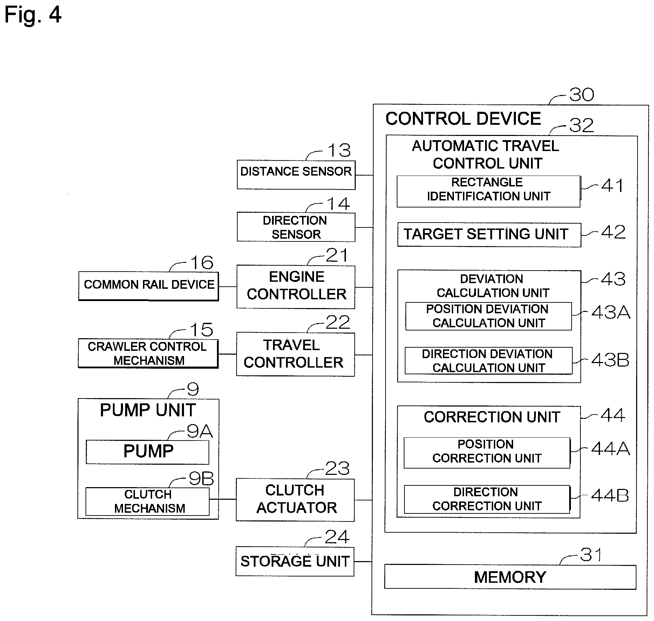

Although the pump unit 9 is not illustrated in FIGs. 1 and 2, in this embodiment, a pump 9A (see FIG. 4) which is rotationally driven by the power of the engine 5, a clutch mechanism 9B that transmits or shuts off the rotational force of the engine 5 to the pump 9A (see FIG. 4), and the like are included. The suction port of the pump 9A is connected to the chemical liquid tank 7 via a hose 10. The discharge port of the pump 9A is connected to the chemical liquid inlet of the nozzle unit 8 via a hose 11. When the pump 9A is rotationally driven, the chemical liquid in the chemical liquid tank 7 is supplied to the nozzle unit 8 via the pump 9A, and the chemical liquid is spouted from the nozzles 8a and 8b.

The work vehicle 1 is equipped with a distance sensor 13 for measuring a distance to an object and a direction sensor (posture sensor) 14 (see FIG. 4) for detecting a direction (posture) of the work vehicle 1. The distance sensor 13 is disposed at a width center position of the front of the work vehicle 1.

The distance sensor 13 may be any sensor that can measure a distance to an object, and for example, a sensor that measures a distance to an object with the use of laser light, a sensor that measures a distance to an object with the use of a camera, or the like may be used. In this embodiment, as the distance sensor 13, for example, a light, detection and ranging, or laser imaging detection and ranging (LIDAR) that measures a distance from a time it takes for a laser light to be illuminated in a pulse form and to be reflected by an object and return is used. In particular, in this embodiment, as the distance sensor 13, a scan sensor LIDAR is used that can detect the direction of an object by scanning a laser light by changing its direction with a movable mirror.

A gyro sensor, a geomagnetic sensor, an inertial measurement unit (IMU), or the like can be used as the direction sensor (posture sensor) 14.

Although not illustrated in FIGs. 1 and 2, the work vehicle 1 is provided with a crawler control mechanism 15 (see FIG. 4) that transmits the driving force of the engine 5 to the right and left traveling devices 2L and 2R to independently control the right and left traveling devices 2L and 2R. The crawler control mechanism 15 is a mechanism for driving the right and left traveling devices 2L and 2R independently to thereby move the work vehicle 1 forward, backward, and turn. Specifically, when the right and left traveling devices 2L and 2R are rotationally driven in a same direction and at a same speed by the crawler control mechanism 15, the work vehicle 1 moves forward or backward. Meanwhile, when the right and left traveling devices 2L and 2R are rotationally driven in a same direction at a different speed or the right and left traveling devices 2L and 2R are rotationally driven in an opposite direction by the crawler control mechanism 15, the work vehicle 1 turns.

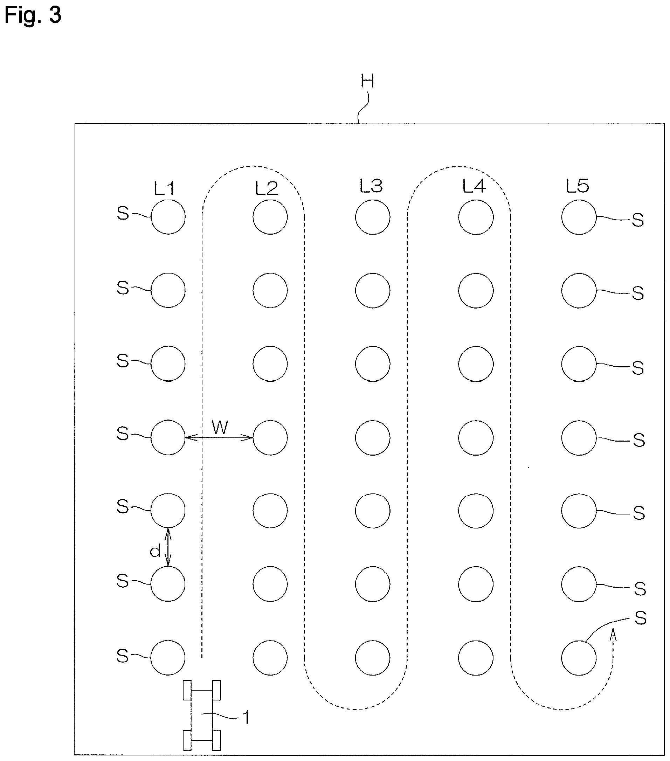

In this embodiment, as illustrated in FIG. 3, the work vehicle 1 automatically travels in a field H where a crop S is planted in a row and sprays a chemical liquid on the crop S. In this embodiment, the crop S is a fruit tree and the field H is an orchard. In this description, the row of the crop S is referred to as a crop row L. In the example of FIG. 3, the row of the crop S arranged vertically is the crop row L. In the field H, five crop rows L1 to L5 are laterally planted at intervals. In each crop row L1 to L5, a plurality of crops S are arranged at substantially equal intervals. These crop rows L1 to L5 are referred to as a first crop row L1, a second crop row L2, a third crop row L3, a fourth crop row L4, and a fifth crop row L5 in order from the left. In addition, of the spaces between adjacent crop rows, the lower side end of FIG. 3 is called a front side end, and the upper side end of FIG. 3 is called a back side end.

For example, the work vehicle 1 automatically travels between crop rows toward the back side end while using, for example, a vicinity of the front side end between the first crop row L1 and the second crop row L2, as an automatic travel start position and setting a target travel route between these crop rows. When the work vehicle 1 reaches the back side end between the crop rows, the work vehicle 1 turns to the right in the traveling direction, and moves to the back side end between the second crop row L2 and the third crop row L3. Then, the work vehicle 1 automatically travels between crop rows toward the front side end while setting the target travel route between the second crop row L2 and the third crop row L3.

When the work vehicle 1 reaches the front side end between the crop rows L2 and L3, the work vehicle 1 turns to the left toward the traveling direction and moves to the front side end between the third crop row L3 and the fourth crop row L4. Then, the work vehicle 1 automatically travels between crop rows toward the back side end while setting the target travel route between the third crop row L3 and the fourth crop row L4. By the same operation, the work vehicle 1 moves as illustrated by the broken line in FIG. 3. Then, for example, after the work vehicle 1 reaches the front side end between the fourth crop row L4 and the fifth crop row L5 and turns to the left toward the traveling direction, the automatic traveling is stopped. During automatic traveling, the pump 9A is driven via the clutch mechanism 9B, and the chemical liquid is ejected from the nozzles 8a and 8b.

In the following, between certain adjacent crop rows, of the front side end and the back side end between the crop rows, the end on the side where the work vehicle 1 starts traveling may be referred to as a traveling start end between the crop rows, and the end on the side opposite to the traveling start end may be called a traveling termination end between the crop rows. In addition, an interval W between adjacent crop rows may be called a row interval.

It is possible for a user or the like to remotely control the work vehicle 1 by operating a remote control device (not illustrated), but such remote control technique is well known. Thus, the description of the specific configuration for performing a remote control is omitted.

FIG. 4 is a block diagram illustrating a main electrical configuration of the work vehicle 1.

The work vehicle 1 includes a control device 30 for controlling the operation of the work vehicle 1.

Connected to the control device 30 are the distance sensor 13, a direction sensor 14, an engine controller 21, a travel controller 22, a clutch actuator 23, a storage unit 24, and the like.

As described above, the distance sensor 13 detects information on a distance from the work vehicle to each of a plurality of objects present in the field H. The main target of the plurality of objects is the crop S. The direction sensor 14 is, as described above, for detecting the direction of the work vehicle 1.

The engine controller 21 controls the number of revolutions of the engine 5, or the like. Specifically, the engine controller 21 controls a common rail device 16 as a fuel injection device provided in the engine 5, thereby controlling the number of revolutions of the engine 5. The engine controller 21 controls the common rail device 16, and thereby can also stop the supply of fuel to the engine 5 and stop the drive of the engine 5.

The travel controller 22 controls forward, backward, turning, and stopping of the work vehicle 1 by controlling the crawler control mechanism 15. The clutch actuator 23 is for fastening and releasing the clutch mechanism 9B in the pump unit 9. The storage unit 24 includes a storage device such as a hard disk and a non-volatile memory.

The control device 30 includes a microcomputer including a central processing unit (CPU) and a memory (read-only memory, or ROM, random-access memory, or RAM, etc.) 31. The control device 30 includes an automatic travel control unit 32 for causing the work vehicle 1 to automatically travel along a target travel route while setting the target travel route between adjacent crop rows L in the field H. The automatic travel control unit 32 includes a rectangle identification unit 41, a target setting unit 42, a deviation calculation unit 43, and a correction unit 44.

The rectangle identification unit 41 estimates the plurality of crop rows on the basis of information on a distance from the work vehicle 1 to each of a plurality of objects present in the field H and identifies a rectangle whose opposite sides are adjacent crop rows of the estimated crop rows. The information on the distance from the work vehicle 1 to each of the plurality of objects present in the field H is the distance information to each object detected by the distance sensor 13. The operation of the rectangle identification unit 41 will be described in detail below.

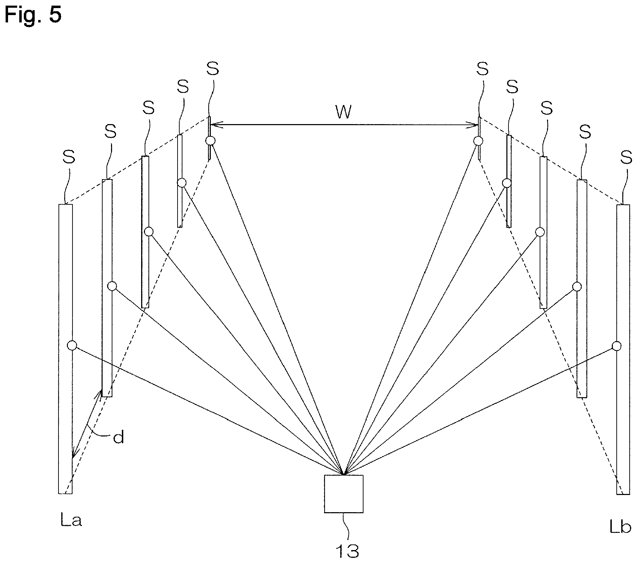

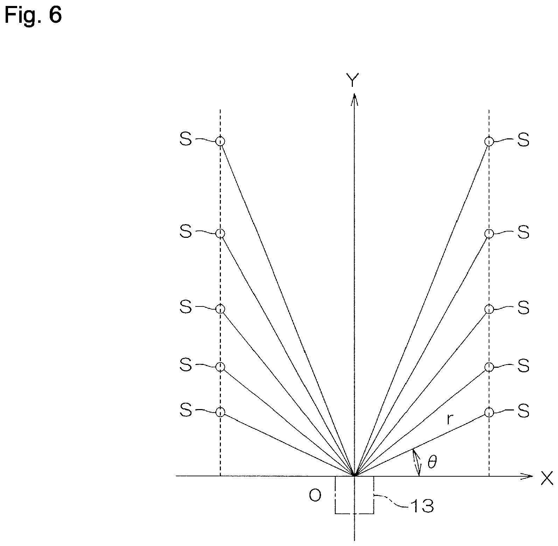

FIG. 5 is a schematic perspective view illustrating a state where a laser light is emitted from the distance sensor 13 to the crop S included in a crop row. FIG. 6 is a schematic plan view of FIG. 5 seen from above. FIGs. 5 and 6 illustrate two adjacent crop rows La and Lb.

Referring to FIG. 6, a coordinate system in which a laser light output position at the distance sensor 13 is an origin O, a straight line passing through the origin O and parallel to the right-left direction of the work vehicle 1 is an X axis, and a straight line passing through the origin O and parallel to the front-rear direction of the work vehicle 1 is a Y axis is called a sensor coordinate system.

The laser light is emitted from the distance sensor 13 in a different direction. A laser light emitting direction (emission angle) $\theta$ is an angle between the +X axis and the laser light, and expressed as an angle counterclockwise around the origin O. When the laser light is output at the emission angle θ and a distance r to a certain object is detected, the combination of the distance r and the emission angle θ (r, θ) is acquired as distance information for the object. The X coordinate value x and the Y coordinate value y of the sensor coordinate system of the object whose distance information is (r, θ) are expressed by the following formula (1).

$$x = r\cos\theta$$
$$y = r\sin\theta \qquad \ldots (1)$$

The rectangle identification unit 41 first detects a position (x, y) of each object whose distance from the distance sensor 13 has been detected, on the basis of the aforementioned formula (1).

Next, the rectangle identification unit 41 detects a plurality of crop rows L on the basis of the position (x, y) of each object.

Next, the rectangle identification unit 41 selects, as a target crop row pair, for example, a crop row pair that is arranged in such a manner that two adjacent crop rows sandwich a straight line passing through the center of the work vehicle 1 and extending in the front-rear direction of the work vehicle 1.

Next, the rectangle identification unit 41 identifies the target crop row pair as a rectangle (rectangle or square) whose opposite sides are two crop rows constituting the target crop row pair. In other words, the rectangle identification unit 41 identifies a rectangle that approximates the target crop row pair. Hereinafter, this process is called a rectangle identification process. In the following, one of the two adjacent sides of the rectangle is called a first side, and the other side is called a second side.

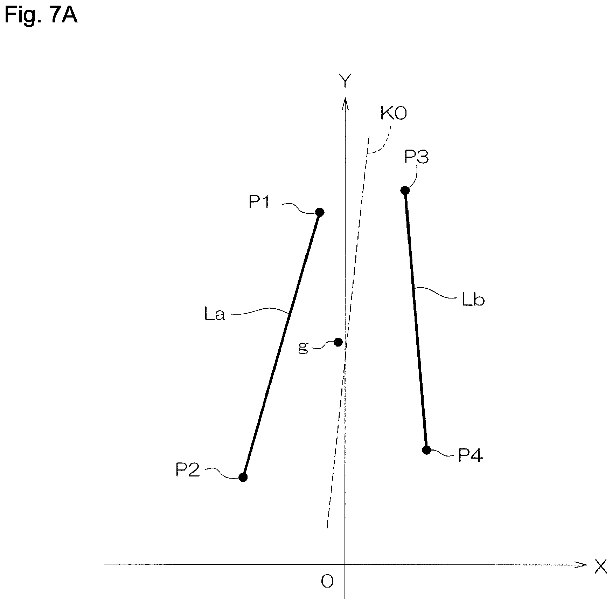

An example of the rectangle identification process will be described below with reference to FIGs. 7A to 7D.

For example, two crop rows La and Lb are selected as the target crop row pair as illustrated in FIG. 7A. The rectangle identification unit 41 first calculates a center of gravity g and a slope a of the target crop row pair. Specifically, the rectangle identification unit 41 acquires the coordinates of end points P1 and P2 of the crop row La and the coordinates of end points P3 and P4 of the crop row Lb. Then, the rectangle identification unit 41 calculates the center of gravity of a quadrangle having these four points as vertices as the center of gravity g of the target crop row pair. The slope a of the target crop row pair is, for example, the slope of a straight line K0 that passes through almost the center between the two crop rows La and Lb, and can be calculated by, for example, a least-squares method. In the following, the slope a of the target crop row pair thus calculated may be referred to as a "first slope a1".

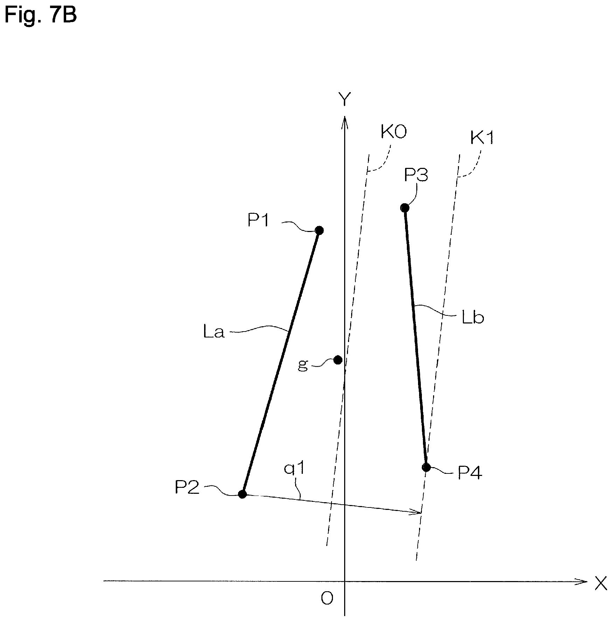

Next, as illustrated in FIG. 7B, the rectangle identification unit 41 obtains a first straight line K1 passing through an end point (P4 in this example) having the largest X coordinate value among the end points P1 to P4 and having a first slope a1. Then, the rectangle identification unit 41 calculates the distance between the first straight line K1 and an end point (P2 in this example) having the smallest X coordinate value among the end points P1 to P4, as a length q1 of the first side.

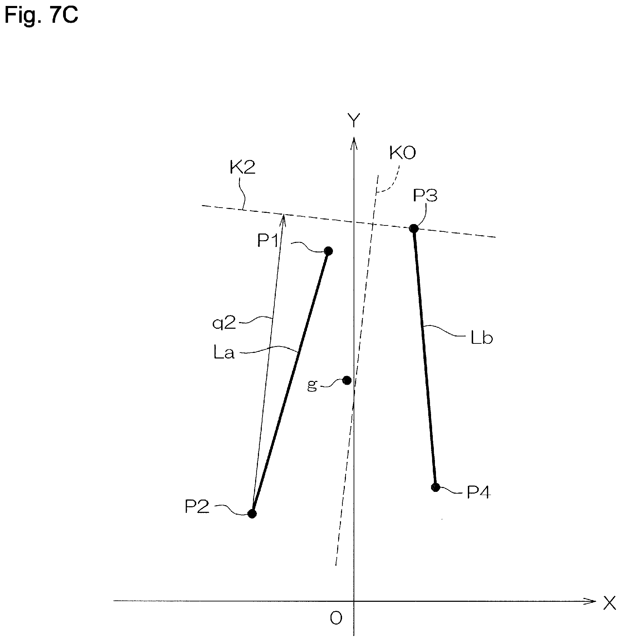

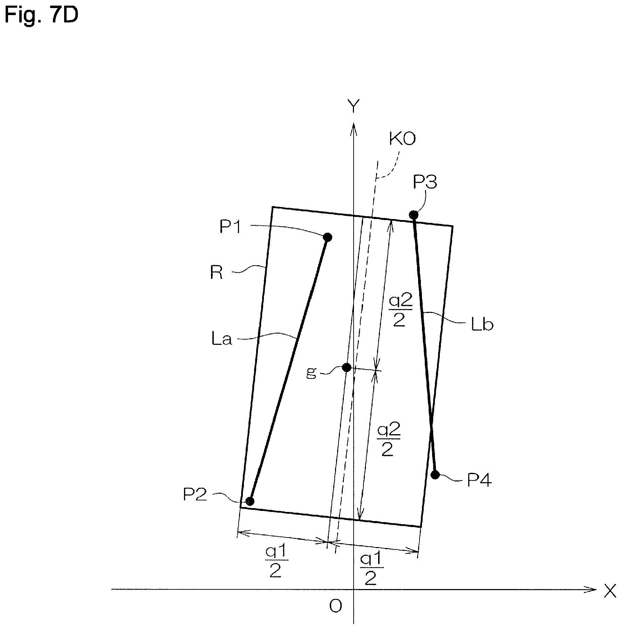

Next, the rectangle identification unit 41 obtains the slope of a straight line orthogonal to the straight line having the first slope a1 in the XY plane, as a second slope a2. Then, as illustrated in FIG. 7, the rectangle identification unit 41 obtains a second straight line K2 passing through an end point (P3 in this example) having the largest Y coordinate value among the end points P1 to P4 and having the second slope a2. Then, the rectangle identification unit 41 calculates the distance between the second straight line K2 and an end point (P2 in this example) having the smallest Y coordinate value among the end points P1 to P4, as a length q2 of the second side.

Finally, the rectangle identification unit 41 identifies, as a rectangle that approximates the target crop row pair, a rectangle having the aforementioned center of gravity g as the center of gravity, the first side whose slope is the second slope a2 and whose length is q1, and the second side whose slope is the first slope a1 and whose length is q2. In the case of the target crop row pair in FIG. 7A, a rectangle that approximates this target crop row pair will be as illustrated by R in FIG. 7D.

The rectangle identification unit 41 may obtain a rectangle that approximates the target crop row pair by a method other than the method described above. As a method for obtaining the rectangle that approximates the target crop row pair, for example, various methods described as background art and various methods described as embodiments of Japanese Unexamined Patent Application Publication No. 2010-108135 can be used.

Referring back to FIG. 4, the target setting unit 42 sets the target travel route and the target direction of the work vehicle 1 between the two crop rows constituting the selected crop row pair, on the basis of the rectangle identified by the rectangle identification unit 41.

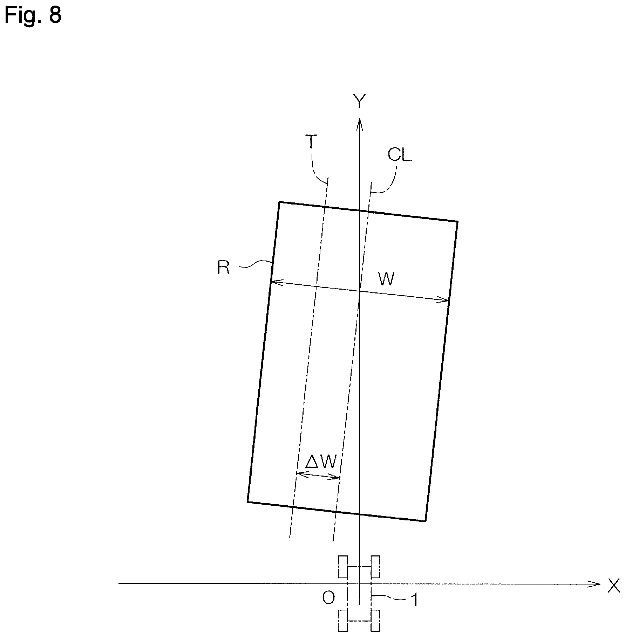

Specifically, the target setting unit 42 specifies the interval between the right and left sides of a rectangle R as a row interval W of the target crop row pair, as illustrated in FIG. 8. In addition, the target setting unit 42 specifies the straight line that passes through the center of the right and left sides of the rectangle R, as a center line CL of the target crop row pair. Then, the target setting unit 42 sets, as a target travel route T, a straight line deviated to the side of one crop row (the left crop row La in the example of FIG. 8) by a predetermined offset amount ΔW, and at the same time sets a direction along the target travel route T as the target direction.

The direction for deviating by the offset amount ΔW with respect to the center line CL differs depending on the target crop row pair. For example, when the first crop row L1 and the second crop row L2 in FIG. 3 are the target crop row pair, the direction for deviating by the offset amount ∆W with respect to the center line CL is the direction of the first crop row L1 side (left side toward the traveling direction). Meanwhile, when the second crop row L2 and the third crop row L3 in FIG. 3 are the target crop row pair, direction for deviating by the offset amount ∆W with respect to the center line CL is the direction of the second crop row L2 side (right side toward the traveling direction).

Referring back to FIG. 4, the deviation calculation unit 43 calculates a deviation amount from the target travel route T and the deviation amount from the target direction. The deviation calculation unit 43 includes a position deviation calculation unit 43A and a direction deviation calculation unit 43B. The position deviation calculation unit 43A estimates the current position of the work vehicle 1 between the two crop rows constituting the target crop row pair on the basis of the rectangle R identified by the rectangle identification unit 41, and calculates a deviation amount (position deviation amount) of the current position from the target travel route. The direction deviation calculation unit 43B calculates a deviation amount (direction deviation amount) of the current direction of the work vehicle 1 detected by the direction sensor 14, from the target direction.

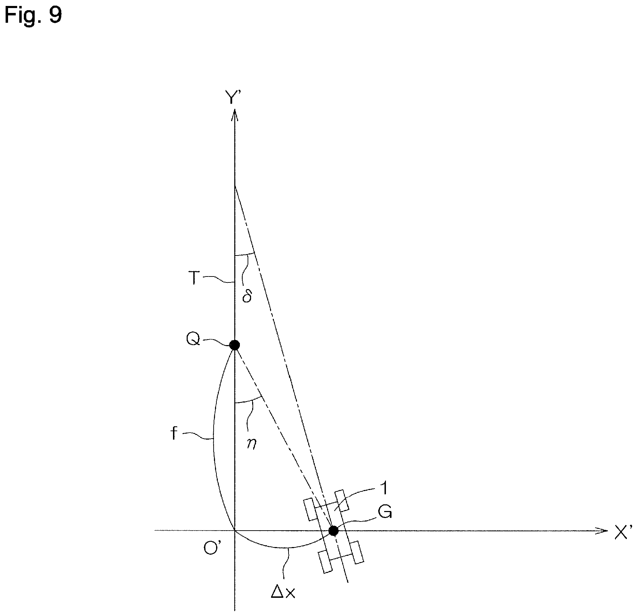

Specifically, as illustrated in FIG. 9, the position deviation calculation unit 43A converts the position and direction of the work vehicle 1 in the sensor coordinate system, into the position and direction of the crop row coordinate system in which the target travel route T is a Y' axis and a line that is orthogonal to the Y' axis and passes through the center of gravity of the work vehicle 1 is an X' axis. The converted position and direction of the work vehicle 1 correspond to the current position and direction of the work vehicle 1 between the two crop rows constituting the target crop row pair.

Next, as illustrated in FIG. 9, the position deviation calculation unit 43A sets, as a target position Q, a position that has advanced in the traveling direction by a predetermined distance f along the target travel route T from the origin O' of the crop row coordinate system. Then, the position deviation calculation unit 43A calculates an angle η between the straight line connecting the target position Q and the center of gravity position G of the work vehicle 1 and the Y' axis, as the position deviation amount (position deviation angle) of the work vehicle 1 with respect to the target travel route T. If the distance between the origin O' and the center of gravity position G of the work vehicle 1 is ∆x, the position deviation amount η can be calculated from the following formula (2).

$$\eta = \cos^{-1}\{f / (\Delta x^2 + f^2)^{1/2}\} \qquad \dots (2)$$

The direction deviation calculation unit 43B calculates an angle δ formed by the orientation (front-rear direction) of the work vehicle 1 and the target direction (Y' axis) as the direction deviation amount. The direction deviation amount δ can be calculated in the same manner as the position deviation amount η by obtaining a Y' coordinate value of the intersection of the Y' axis and a straight line passing through the center of gravity G of the work vehicle 1 and extending in the front-rear direction of the work vehicle 1

Referring back to FIG. 4, the correction unit 44 includes a position correction unit 44A and a direction correction unit 44B. The position correction unit 46A corrects the position of the work vehicle 1 between the crop rows in such a manner that the position approaches the target travel route T, on the basis of the position deviation amount η calculated by the position deviation calculation unit 43A. The direction correction unit 44B corrects the direction of the work vehicle 1 between the crop rows in such a manner that the direction approaches the target direction, on the basis of the direction deviation amount δ calculated by the direction deviation calculation unit 43B. That is, in this embodiment, the correction unit 44 controls the crawler control mechanism 15 in such a manner that the position deviation amount η approaches zero and the direction deviation amount δ approaches zero.

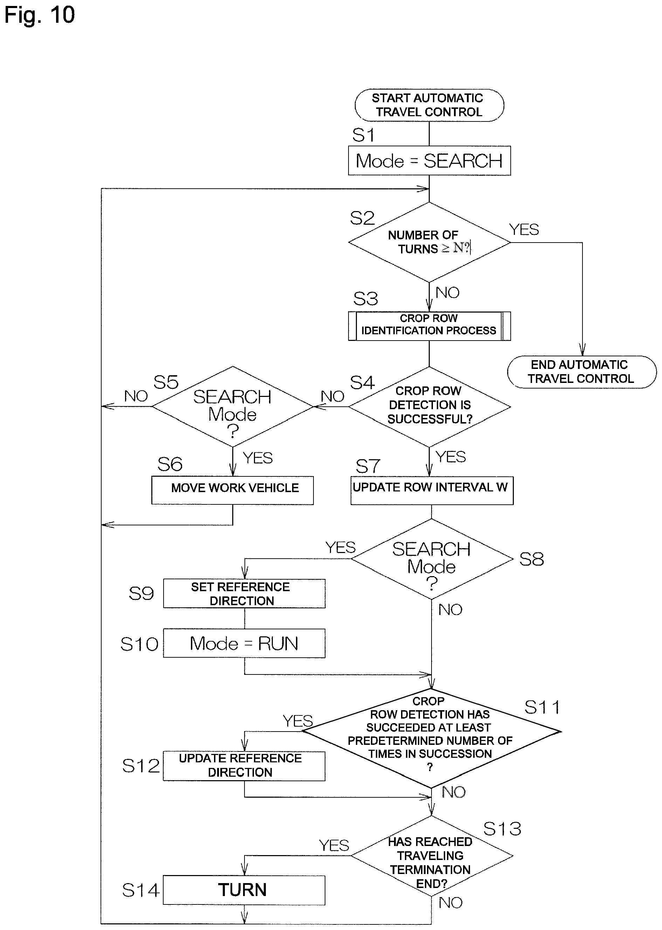

FIG. 10 is a flowchart illustrating an overall procedure of an automatic travel control process by the automatic travel control unit 32.

The operation modes of the work vehicle 1 include a search mode and a run mode. The search mode refers to a mode for setting the target travel route and target direction, and the like by performing a crop row identification process before entering between crop rows. The crop row identification process refers to a process performed by the rectangle identification unit 41, target setting unit 42, and deviation calculation unit 43 to set the target travel route T and target direction and calculate the row interval W, the position deviation amount η from the target travel route T, the direction deviation amount δ from the target direction, and the like.

The run mode is a mode in which the work vehicle 1 caused to travel in such a manner that the position deviation amount η and the direction deviation amount δ approach zero while performing the crop row identification process.

When performing an automatic travel control, the user sets the row interval W and a target number of turns N to the work vehicle 1. The target number of turns N is the number of turns of the work vehicle 1 expected to be performed before the work vehicle 1 reaches a position at which automatic operation should be stopped after it is started. The row interval W and the target number of turns N set by the user are stored in the memory 31. In addition, the user moves the work vehicle 1 to the vicinity of the start position of automatic travel by, for example, a remote control. Then, the user starts the automatic travel control by, for example, a remote control.

When the automatic travel control is started, the automatic travel control unit 32 sets the operation mode to a search mode (step S1). Then, the automatic travel control unit 32 determines if the number of turns of the work vehicle 1 has reached the target number of turns N.

If the number of turns of the work vehicle 1 has not reached the target number of turns N (step S2: NO), the automatic travel control unit 32 performs the crop row identification process described above (step S3).

Next, the automatic travel control unit 32 determines whether the crop row detection is successful (step S4). Specifically, the automatic travel control unit 32 determines that the crop row detection is successful if a success or failure condition is fulfilled in which the position deviation amount $\eta$ calculated by the crop row identification process is within a first predetermined range and the direction deviation amount $\delta$ calculated by the crop row identification process is within a second predetermined range. On the other hand, if the target crop row pair is not specified by the crop row identification process, or if the target crop row pair is specified and the success or failure determination condition is not fulfilled, the automatic travel control unit 32 determines that the crop row detection has failed.

When it is determined that the crop row detection has failed (step S4: NO), the automatic travel control unit 32 determines whether the operation mode is the search mode (step S5). If the operation mode is the search mode (step S5: YES), the automatic travel control unit 32 changes the position of the work vehicle 1 and moves the work vehicle 1 again to perform the crop row identification process (step S6).

Specifically, the automatic travel control unit 32 may simply retract the work vehicle 1 by a predetermined amount when the target crop row pair is not specified in the crop row identification process of step S3. On the other hand, when the target crop row pair is specified in the crop row identification process of step S3, the automatic travel control unit 32 may move the work vehicle 1 to the center position side between the two crop rows constituting the target crop row pair. When the process of step S6 is completed, the automatic travel control unit 32 returns to step S2.

In step S5, if it is determined that the operation mode is the run mode (step S5: NO), the automatic travel control unit 32 returns to step S2.

In step S4, if it is determined that the crop row detection is successful (step S4: YES), the automatic travel control unit 32 updates the row interval W in the memory 31 (step S7). Specifically, the automatic travel control unit 32 rewrites the row interval W stored in the memory 31 to the row interval W acquired by the crop row identification process of step S3.

Next, the automatic travel control unit 32 determines whether the operation mode is the search mode (step S8). If the operation mode is the search mode (step S8: YES), the automatic travel control unit 32 sets a reference direction (step S9). Specifically, the automatic travel control unit 32 uses the direction deviation amount $\delta$ calculated in step S3 and the direction of the work vehicle 1 currently detected by the direction sensor 14 to convert the target direction set in step S3 into the direction detected by the direction sensor 14. Then, the automatic travel control unit 32 stores the converted direction in the memory 31 as the reference direction. In this way, the difference between the direction of the work vehicle 1 detected by the direction sensor 14 and the reference direction can be detected as the direction deviation amount of the direction of the work vehicle 1 with respect to the target direction.

Next, the automatic travel control unit 32 sets the operation mode to the run mode (step S10). Then, the automatic travel control unit 32 proceeds to step S11. In the run mode, the correction unit 44 of the automatic travel control unit 32 controls the crawler control mechanism 15 in such a manner that the position deviation amount $\eta$ and the direction deviation amount $\delta$ approach zero.

In step S8, if it is determined that the operation mode is the run mode (step S8: NO), the automatic travel control unit 32 proceeds to step S11. In step S11, the automatic travel control unit 32 determines whether the determination result of step S4 is that the crop row detection has succeeded at least a predetermined number of times in succession.

If the determination result in step S4 is that the crop row detection has succeeded at least a predetermined number of times in succession (step S11: YES), the automatic travel control unit 32 updates the reference direction (step S12). Specifically, the automatic travel control unit 32 uses the direction deviation amount $\delta$ set in step S3 and the direction of the work vehicle 1 currently detected by the direction sensor 14 to convert the target direction set in step S3 into the direction detected by the direction sensor 14. Then, the automatic travel control unit 32 rewrites the reference direction stored in the memory 31 to the converted direction. After this, the automatic travel control unit 32 proceeds to step S13.

In step S11, if it is determined that the determination result of step S4 is not that the crop row detection has succeeded at least a predetermined number of times in succession (step S 11: NO), the automatic travel control unit 32 does not update the reference direction, and proceeds to step S13. The reference direction is updated only if the determination result of step S4 is that the crop row detection has succeeded at least a predetermined number of times in succession. This is to prevent the reference direction from being updated when the crop row identification process is not performed accurately due to the effect of noise or the like.

In step S13, the automatic travel control unit 32 determines whether the work vehicle 1 has reached the traveling termination end (row end) between the crop rows. The automatic travel control unit 32 starts to measure the traveling distance, for example, when the work vehicle 1 reaches a front position by a predetermined distance from the traveling termination end between the target crop row pair, and determines that the work vehicle 1 has reached the traveling termination end between the crop rows when the measured traveling distance reaches the aforementioned predetermined distance. The automatic travel control unit 32 may start measuring time when the work vehicle 1 reaches the front position by a predetermined distance from the traveling termination end between the target crop row pair, and may determine that the work vehicle 1 has reached the traveling termination end between the crop rows when a time required for the work vehicle 1 to travel the predetermined distance has elapsed.

If the work vehicle 1 has not reached the traveling termination end between the target crop row pair (step S13: NO), the automatic travel control unit 32 returns to step S2.

In step S13, if it is determined that the work vehicle 1 has reached the traveling termination end between the target crop row pair (step S13:YES), the automatic travel control unit 32 turns the work vehicle 1 in order to move the work vehicle 1 to the traveling start end between the next crop rows (step S14). Specifically, the automatic travel control unit 32 controls the crawler control mechanism 15 to turn the work vehicle 1 approximately 180 degrees in a predetermined turning direction. The turning radius is set to 1/2 of the row interval W stored in the memory 31.

The predetermined turning direction is determined on the basis of the preset turning direction at the first traveling termination end and information on the number of turns as of the current turn. For example, when the turning direction at the first traveling termination end is to the right, if the current turn is an odd number, the turning direction is to the right, and if the current turn is an even number, the turning direction is to the left. On the other hand, when the turning direction at the first traveling termination end is to the left, if the current turn is an odd number the turning direction is to the left, and if the current turn is an even number, the turning direction is to the right.

When the process of step S14 is completed, the automatic travel control unit 32 returns to step S2.

In step S2, when it is determined that the number of turns of the work vehicle 1 has reached the target number of turns N (step S2: YES), the automatic travel control unit 32 ends the automatic travel control.

In the flowchart of FIG. 10, the automatic travel control unit 32 returns to step S2 after the turning in step S14, but may return to step S1 after the turning in step S14. In this case, after the turning in step S14, the operation mode is set to the search mode, and thus the work vehicle is temporarily stopped.

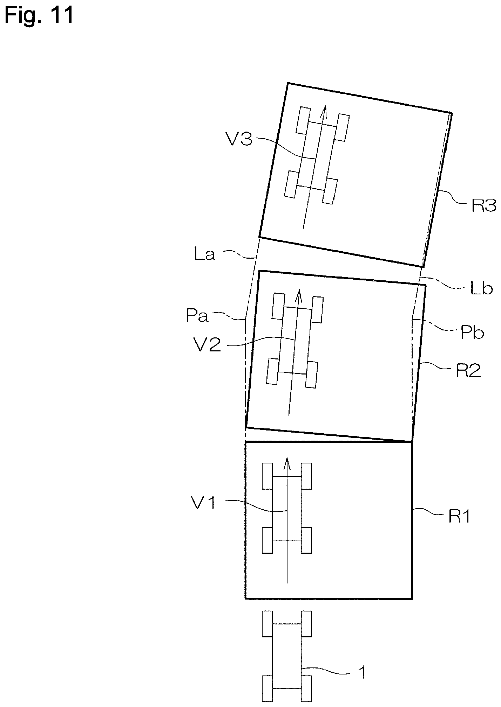

Depending on the field H, the adjacent crop rows L may not be straight but may be bent in the middle. In other words, the slopes of the adjacent crop rows L may change in the middle. In such a case, it is necessary to change the direction (target direction) of the target travel route of the work vehicle 1 in accordance with the change in the slopes of the adjacent crop rows L. In the aforementioned embodiment, since the target direction (reference direction) is updated on the basis of the rectangle identified by the crop row identification process (see step S3) during automatic traveling, the target direction of the work vehicle 1 can be changed in accordance with the change in the slopes of the crop rows. In this respect, the description will be given with the use of FIG. 11.

In FIG. 11, the two crop rows La and Lb constituting the target crop row pair are respectively bent to the right near intermediate positions Pa and Pb in the length direction. The work vehicle 1 is assumed to automatically travel between the crop rows La and Lb from the lower side to the upper side of the paper surface of FIG. 11. For convenience of explanation, it is assumed that the lower side end between the crop rows in FIG. 11 is the traveling start point and the upper side end between the crop rows is the traveling end point.

First, the automatic travel control unit 32 identifies a first rectangle R1 corresponding to the portion from the traveling start point between the crop rows La and Lb to bending points Pa and Pb of the crop rows La and Lb. The slope (target direction) of both the right and left sides of the first rectangle R1 is an angle according to the average slope of the portion from the traveling start point in the crop rows La and Lb to the bending points Pa and Pb of the crop rows La and Lb. Therefore, the work vehicle 1 travels as indicated by an arrow V1.

When the work vehicle 1 approaches the bending points Pa and Pb of the crop rows La and Lb, the automatic travel control unit 32 identifies a second rectangle R2 corresponding to the portion including the bending points Pa and Pb in the crop rows La and Lb in the middle in the length direction. The slope (target direction) of both the right and left sides of the second rectangle R2 is an angle according to the average slope of the portion including the bending points Pa and Pb in the crop rows La and Lb in the middle in the length direction. Therefore, the slope of the second rectangle R2 is an angle inclined to the right toward the traveling direction with respect to the slope of the first rectangle R1. As a result, the target direction (reference direction) is corrected to the right side toward the traveling direction. Therefore, the work vehicle 1 travels as indicated by an arrow V2.

When the work vehicle 1 passes through the bending points Pa and Pb of the crop rows La and Lb, the automatic travel control unit 32 identifies a third rectangle R3 corresponding to a portion further to the traveling termination end side than the bending points Pa and Pb in the crop rows La and Lb. The slope (target direction) of both the right and left sides of the third rectangle R3 is an angle according to the average slope of the portion further to the traveling termination end side than the bending points Pa and Pb in the crop rows La and Lb. Therefore, the slope of the third rectangle R3 is an angle further inclined to the right toward the traveling direction with respect to the slope of the second rectangle R2. As a result, the target direction (reference direction) is corrected to the right side toward the traveling direction. Therefore, the work vehicle 1 travels as indicated by an arrow V3. In this way, the work vehicle 1 travels along the target travel route according to the shape of the crop rows La and Lb even when the crop rows La and Lb are bent in the middle.

That is, in the aforementioned embodiment, a rectangle whose opposite sides are adjacent crop rows is identified, and on the basis of the identified rectangle, the target travel route and the target direction are set, and at the same time the current position of the work vehicle is estimated. Therefore, for example, when the slopes of adjacent crop rows change in the middle, such as when the adjacent crop rows bend in the middle, a rectangle according to a slope near the work vehicle in the adjacent crop rows is identified. This makes it possible to set a target travel route between adjacent crop rows corresponding to changes in the slopes of these crop rows, and to estimate the position of the work vehicle 1 between both crop rows.

While the embodiment of the present invention has been described above, the present invention can be implemented in other forms. For example, in the aforementioned embodiment, the work vehicle 1 is moved to the automatic travel start position by remote control. However, the work vehicle 1 may be transported to the automatic travel start position by a truck or the like. In addition, the work vehicle 1 may be manually operated and may be moved to the automatic travel start position by the manual operation.

In addition, in the aforementioned embodiment, the LIDAR is used as the distance sensor 13, but a distance sensor other than LIDAR such as a monocular camera or a stereo camera may be used.

Furthermore, in the aforementioned embodiment, the case where the work vehicle is a work vehicle for spraying a chemical liquid has been described, but the work vehicle may be a work vehicle for other than spraying a chemical liquid.

While the embodiment of the present invention has been described in detail, that is merely a specific example used for clarifying the technical content of the present invention, and the present invention should not be construed as limited to the specific example, but the scope of the invention is limited only by the appended claims.

DESCRIPTION OF REFERENCE NUMERALS

1 work vehicle
13 distance sensor
14 direction sensor
15 crawler control mechanism
16 common rail device

21 engine controller
22 travel controller
30 control device
31 memory
32 automatic travel control unit
41 rectangle identification unit
42 target setting unit
43 deviation calculation unit
43A position deviation calculation unit
43B direction deviation calculation unit
44 correction unit
44A position correction unit
44B direction correction unit

**Claims**

1. A work vehicle configured to travel in a field where a plurality of crop rows are planted, the work vehicle comprising:

   a distance sensor configured to acquire information on a distance from the work vehicle to each of a plurality of objects present in the field;
   **characterised by**
   a rectangle identification unit configured to estimate the plurality of crop rows on a basis of the distance information and identify a rectangle whose opposite sides are adjacent crop rows of the estimated crop rows;
   a target setting unit configured to set a target travel route of the work vehicle between the adjacent crop rows on a basis of the rectangle; and
   a position deviation calculation unit configured to estimate a current position of the work vehicle between the adjacent crop rows on a basis of the rectangle and calculate a deviation amount of the current position from the target travel route.

2. The work vehicle according to claim 1, further comprising a position correction unit configured to correct a position of the work vehicle between the crop rows in such a manner that the position approaches the target travel route, on a basis of the deviation amount calculated by the position deviation calculation unit.

3. The work vehicle according to claim 1 or 2, further comprising a direction sensor configured to detect a direction of the work vehicle,

   wherein the target setting unit is configured to also set a target direction of the work vehicle, and
   wherein the work vehicle further includes a direction deviation calculation unit configured to calculate a deviation amount of a current direction of the work vehicle detected by the direction sensor, from the target direction.

4. The work vehicle according to claim 3, further comprising a direction correction unit configured to correct a direction of the work vehicle between the crop rows in such a manner that the direction approaches the target direction, on a basis of the deviation amount calculated by the direction deviation calculation unit.

5. The work vehicle according to claim 3 or 4,

wherein the rectangle identification unit repeatedly identifies the rectangle while the work vehicle travels between the crop rows,
wherein the target direction setting unit sets the target direction on a basis of the rectangle each time the rectangle is identified, and
wherein the direction deviation calculation unit calculates a deviation amount of a current direction of the work vehicle, detected by the direction sensor, from the target direction, each time the target direction is set.

6. A deviation amount calculation program that sets a target travel route of a work vehicle in a field where a plurality of crop rows are planted and calculates a deviation amount of the work vehicle from the target travel route, the deviation amount calculation program causing a computer to function as:

a rectangle identification unit for estimating the plurality of crop rows on a basis of information on a distance from the work vehicle to each of a plurality of objects present in the field and identifying a rectangle whose opposite sides are adjacent crop rows of the estimated crop rows;
a target setting unit for setting a target travel route of the work vehicle between the adjacent crop rows on a basis of the rectangle; and
a position deviation calculation unit for estimating a current position between the adjacent crop rows on a basis of the rectangle and calculate a deviation amount of the current position from the target travel route.

**Patentansprüche**

1. Arbeitsfahrzeug, das dazu ausgelegt ist, auf einem Feld zu fahren, auf dem eine Vielzahl von Anbaureihen gepflanzt sind, wobei das Arbeitsfahrzeug Folgendes umfasst:

einen Abstandssensor, der dazu ausgelegt ist, Informationen über einen Abstand vom Arbeitsfahrzeug zu jedem einer Vielzahl von auf dem Feld vorhandenen Objekten zu erfassen;

**gekennzeichnet durch**
eine Rechteckidentifikationseinheit, die dazu ausgelegt ist, die Vielzahl von Anbaureihen auf Basis der Abstandsinformationen zu schätzen und ein Rechteck zu identifizieren, dessen gegenüberliegende Seiten benachbarte Anbaureihen der geschätzten Anbaureihen sind;
eine Zieleinstellungseinheit, die dazu ausgelegt ist, auf Basis des Rechtecks zwischen den benachbarten Anbaureihen eine Zielfahrtroute des Arbeitsfahrzeugs einzustellen; und
eine Positionsabweichungsberechnungseinheit, die dazu ausgelegt ist, auf Basis des Rechtecks eine aktuelle Position des Arbeitsfahrzeugs zwischen den benachbarten Anbaureihen zu schätzen und einen Abweichungsbetrag der aktuellen Position von der Zielfahrtroute zu berechnen.

2. Arbeitsfahrzeug nach Anspruch 1, das ferner eine Positionskorrektureinheit umfasst, die dazu ausgelegt ist, auf Basis des von der Positionsabweichungsberechnungseinheit berechneten Abweichungsbetrags eine Position des Arbeitsfahrzeugs zwischen den Anbaureihen in einer Weise zu korrigieren, dass sich die Position der Zielfahrtroute annähert.

3. Arbeitsfahrzeug nach Anspruch 1 oder 2, das ferner einen Richtungssensor umfasst, der dazu ausgelegt ist, eine Richtung des Arbeitsfahrzeugs zu detektieren,

wobei die Zieleinstellungseinheit dazu ausgelegt ist, auch eine Zielrichtung des Arbeitsfahrzeugs einzustellen, und
wobei das Arbeitsfahrzeug ferner eine Richtungsabweichungsberechnungseinheit umfasst, die dazu ausgelegt ist, einen Abweichungsbetrag der aktuellen Richtung des Arbeitsfahrzeugs, die vom Richtungssensor detektiert wird, von der Zielrichtung zu berechnen.

4. Arbeitsfahrzeug nach Anspruch 3, das ferner eine Richtungskorrektureinheit umfasst, die dazu ausgelegt ist, auf Basis des von der Richtungsabweichungsberechnungseinheit berechneten Abweichungsbetrags eine Richtung des Arbeitsfahrzeugs zwischen den Anbaureihen in einer Weise zu korrigieren, dass sich die Richtung der Zielrichtung annähert.

5. Arbeitsfahrzeug nach Anspruch 3 oder 4,

wobei die Rechteckidentifikationseinheit das Rechteck wiederholt identifiziert, während das Arbeitsfahrzeug zwischen den Anbaureihen fährt,

wobei die Zielrichtungseinstellungseinheit die Zielrichtung bei jeder Identifikation des Rechtecks auf Basis des Rechtecks einstellt und wobei die Richtungsabweichungsberechnungseinheit einen Abweichungsbetrag der aktuellen Richtung des Arbeitsfahrzeugs, die vom Richtungssensor detektiert wird, von der Zielrichtung bei jeder Einstellung der Zielrichtung berechnet.

6. Abweichungsbetragsberechnungsprogramm, das eine Zielfahrtroute eines Arbeitsfahrzeugs auf einem Feld, auf dem eine Vielzahl von Anbaureihen gepflanzt sind, einstellt und einen Abweichungsbetrag des Arbeitsfahrzeugs von der Zielfahrtroute berechnet, wobei das Abweichungsbetragsberechnungsprogramm einen Computer veranlasst, als Folgendes zu fungieren:

eine Rechteckidentifikationseinheit zum Schätzen der Vielzahl von Anbaureihen auf Basis von Informationen über einen Abstand vom Arbeitsfahrzeug zu jedem einer Vielzahl von auf dem Feld vorhandenen Objekten und Identifizieren eines Rechtecks, dessen gegenüberliegende Seiten benachbarte Anbaureihen der geschätzten Anbaureihen sind;
eine Zieleinstellungseinheit zum Einstellen einer Zielfahrtroute des Arbeitsfahrzeugs auf Basis des Rechtecks zwischen den benachbarten Anbaureihen und
eine Positionsabweichungsberechnungseinheit zum Schätzen einer aktuelle Position zwischen den benachbarten Anbaureihen auf Basis des Rechtecks und Berechnen eines Abweichungsbetrags der aktuellen Position von der Zielfahrtroute.

**Revendications**

1. Véhicule de travail configuré pour se déplacer dans un champ où une pluralité de rangs de culture sont plantés, le véhicule de travail comprenant :

un capteur de distance configuré pour acquérir des informations sur une distance entre le véhicule de travail et chacun d'une pluralité d'objets présents dans le champ ;
**caractérisé par**
une unité d'identification de rectangle configurée pour estimer la pluralité de rangs de culture sur la base des informations de distance et identifier un rectangle dont les côtés opposés sont des rangs de culture adjacents des rangs de culture estimés ;
une unité de définition de cible configurée pour définir un itinéraire de déplacement cible du véhicule de travail entre les rangs de culture adjacents sur la base du rectangle ; et
une unité de calcul d'écart de position configurée pour estimer une position actuelle du véhicule de travail entre les rangs de culture adjacents sur la base du rectangle et calculer une quantité d'écart de la position actuelle par rapport à l'itinéraire de déplacement cible.

2. Véhicule de travail selon la revendication 1, comprenant en outre une unité de correction de position configurée pour corriger une position du véhicule de travail entre les rangs de culture de telle manière que la position se rapproche de l'itinéraire de déplacement cible, sur la base de la quantité d'écart calculée par l'unité de calcul d'écart de position.

3. Véhicule de travail selon la revendication 1 ou 2, comprenant en outre un capteur de direction configuré pour détecter une direction du véhicule de travail,

dans lequel l'unité de définition de cible est configurée également pour définir une direction cible du véhicule de travail, et
dans lequel le véhicule de travail comporte en outre une unité de calcul d'écart de direction configurée pour calculer une quantité d'écart d'une direction actuelle du véhicule de travail détectée par le capteur de direction, par rapport à la direction cible.

4. Véhicule de travail selon la revendication 3, comprenant en outre une unité de correction de direction configurée pour corriger une direction du véhicule de travail entre les rangs de culture de telle manière que la direction se rapproche de la direction cible, sur la base de la quantité d'écart calculée par l'unité de calcul d'écart de direction.

5. Véhicule de travail selon la revendication 3 ou 4,

dans lequel l'unité d'identification de rectangle identifie de manière répétée le rectangle tandis que le véhicule de travail se déplace entre les rangs de culture,
dans lequel l'unité de définition de direction cible définit la direction cible sur la base du rectangle chaque fois que le rectangle est identifié, et
dans lequel l'unité de calcul d'écart de direction calcule une quantité d'écart d'une direction actuelle du véhicule de travail, détectée par le capteur de direction, par rapport à la direction cible, chaque fois que la direction cible est définie.

6. Programme de calcul de quantité d'écart qui définit un itinéraire de déplacement cible d'un véhicule de travail dans un champ où une pluralité de rangs de culture sont plantés et qui calcule une quantité d'écart du véhicule de travail par rapport à l'itinéraire de déplacement cible, le programme de calcul de quantité d'écart amenant un ordinateur à fonctionner comme :

une unité d'identification de rectangle pour estimer la pluralité de rangs de culture sur la base d'informations sur une distance entre le véhicule de travail et chacun d'une pluralité d'objets présents dans le champ et pour identifier un rectangle dont les côtés opposés sont des rangs de culture adjacents des rangs de culture estimés ;

une unité de définition de cible pour définir un itinéraire de déplacement cible du véhicule de travail entre les rangs de culture adjacents sur la base du rectangle ; et

une unité de calcul d'écart de position pour estimer une position actuelle entre les rangs de culture adjacents sur la base du rectangle et calculer une quantité d'écart de la position actuelle par rapport à l'itinéraire de déplacement cible.

Fig. 1

Fig. 2

Fig. 3

Fig. 4

Fig. 5

Fig. 6

Fig. 7A

Fig. 7B

Fig. 7C

Fig. 7D

Fig. 8

Fig. 9

## Fig. 10

START AUTOMATIC
TRAVEL CONTROL

S1
Mode = SEARCH

S2
NUMBER OF
TURNS ≥ N? — YES

NO

S3
CROP ROW
IDENTIFICATION PROCESS

END AUTOMATIC
TRAVEL CONTROL

S5 — NO
SEARCH
Mode
? — NO
S4
CROP ROW
DETECTION IS
SUCCESSFUL?

S6 — YES
MOVE WORK VEHICLE

S7 — YES
UPDATE ROW INTERVAL W

YES
SEARCH
Mode
? — S8

NO

S9
SET REFERENCE
DIRECTION

S10
Mode = RUN

S11
CROP
ROW DETECTION HAS
SUCCEEDED AT LEAST
PREDETERMINED NUMBER OF
TIMES IN SUCCESSION
?

YES
S12
UPDATE REFERENCE
DIRECTION

NO

S13
HAS REACHED
TRAVELING
TERMINATION
END?

YES
S14
**TURN**

NO

27

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016208871 A
- JP 11275912 A
- JP H01206904 A
- US 2010104194 A1
- JP 2010108135 A